**Europäisches Patentamt**

**European Patent Office**

**Office européen des brevets**

(19)

(11) Veröffentlichungsnummer : **0 278 218 B1**

(12) **EUROPÄISCHE PATENTSCHRIFT**

(45) Veröffentlichungstag der Patentschrift :
**13.03.91 Patentblatt 91/11**

(51) Int. Cl.⁵ : **B65H 3/08**, B65H 3/04,
B31B 1/06

(21) Anmeldenummer : **88100137.4**

(22) Anmeldetag : **08.01.88**

(54) **Vorrichtung zum Vereinzeln gestapelter Zuschnitte.**

(30) Priorität : **07.02.87 DE 3703845**

(43) Veröffentlichungstag der Anmeldung :
**17.08.88 Patentblatt 88/33**

(45) Bekanntmachung des Hinweises auf die
Patenterteilung :
**13.03.91 Patentblatt 91/11**

(84) Benannte Vertragsstaaten :
**AT BE CH DE ES FR GB IT LI NL SE**

(56) Entgegenhaltungen :
**AT-B- 343 053**
**US-A- 4 549 730**

(73) Patentinhaber : **JAGENBERG**
**Aktiengesellschaft**
**Kennedydamm 15-17**
**W-4000 Düsseldorf 30 (DE)**

(72) Erfinder : **Saro, Karl**
**Berliner Strasse 58**
**W-4030 Ratingen (DE)**

(74) Vertreter : **Pfeiffer, Helmut, Dipl.-Ing.**
**Jagenberg AG Patentwesen Kennedydamm**
**15-17 Postfach 1123**
**W-4000 Düsseldorf 30 (DE)**

## Beschreibung

Die Erfindung bezieht sich auf eine Vorrichtung zum Vereinzeln gestapelter Zuschnitte gemäß dem Oberbegriff des Patentanspruchs 1.

Derartige Vereinzelungsvorrichtungen dienen dazu, Faltschachtelklebemaschinen in einem bestimmten Takt Pappzuschnitte zuzuführen ; dies geschieht bei einer aus der deutschen Offenlegungsschrift 29 46 426 bekannten Vorrichtung mittels heb- und senkbarer Förderriemen, auf deren Führungen ein Zuschnittstapel vor einem Anschlag in Gestalt zweier Stellzungen liegt, der etwa im Abstand der Dicke eines Zuschnitts oberhalb der Riemen angeordnet ist. Beim Anheben der Riemen mit Hilfe einer oder mehrerer Exzenterwellen erfassen die Förderriemen den zuunterst liegenden Zuschnitt und fördern diesen durch den Spalt zwischen dem Anschlag und dem unterhalb des Anschlags abgestützten Förderriemen in Richtung auf den Zuführförderer einer Falt- und Klebemaschine. Mit der weiteren Drehung der Exzenterwelle werden die Förderriemen mehr und mehr bis in ihre Ruhestellung abgesenkt und alsdann wieder angehoben, bis sie den nächstfolgenden Zuschnitt berühren und diesen unter dem Stapel abfördern.

Voraussetzung für ein ungestörtes Abfördern der Zuschnitte ist jedoch ein möglichst geringer Schlupf zwischen Zuschnitt und Förderriemen. Das setzt eine möglichst vollflächige Berührung zwischen den Förderriemen und dem jeweils abzufördernden Zuschnitt voraus.

Um die einzelnen Zuschnitte in einem bestimmten Takt und mit einem bestimmten, von Programmänderungen abgesehen, gleichbleibenden gegenseitigen Abstand der Falt- und Klebemaschine zuzuführen, ist es daher auch bekannt, die Förderriemen mit an eine Unterdruckquelle angeordneten Saugöffnungen zu versehen, so daß der jeweils unterste Zuschnitt infolge der Saugkraft vorübergehend mehr oder minder unverrückbar auf den Förderriemen festliegt.

Aber auch das gewährleistet nicht in allen Fällen ein schlupfloses Abfördern bzw. Vereinzeln der Zuschnitte, da diese häufig konkav oder konvex in der Förderrichtung oder auch quer zur Förderrichtung gekrümmt sind. Da diese Krümmungen von der Faserrichtung des jeweiligen Zuschnitts und dessen Trocknungsbedingungen beim Herstellen abhängig sind, treten sie unregelmäßig auf, so daß sich ihnen auch nicht durch ein entsprechendes Einstellen der Förderriemen und/oder deren Riemenführungen entgegenwirken läßt.

Aus der AT-B-345053 ist eine gattungsgemäße Vorrichtung bekannt, bei der die Zuschnitte nicht mittels Reibschluß, sondern mittels Formschluß abgefördert werden. Dazu sind die Förderriemen quer mit Stangen miteinander verbunden, so daß Aufnahmefächer für die einzelnen Zuschnitte gebildet werden. Die Saugnäpfe dienen ausschließlich dazu, die Zuschnitte aus einem Behälter gegen die Rückhaltekraft von Haltezähnen herauszuziehen und in die Fächer abzulegen. Die Vorrichtung läßt sich somit nur taktweise, nicht auch mit permanent laufenden Förderriemen betreiben.

Der Erfindung liegt daher die Aufgabe zugrunde, eine Vorrichtung zu schaffen, die auch bei gekrümmten Zuschnitten einen möglichst vollflächigen Kontakt Zuschnitt/Förderriemen zum Abfördern mittels Reibschluß gewährleistet, gleichviel mit welcher Regelmäßigkeit und in welcher Richtung die Zuschnitte gekrümmt sind.

Diese Aufgabe wird mit den Merkmalen des Patentanspruchs 1 gelöst. Der Hilfssauger dient dazu, einen gekrümmten Zuschnitt im Bereich der Zuschnittkrümmung in Richtung des Förderriemens zu ziehen, um auch im Bereich der Krümmung einen flächigen Kontakt Förderriemen/ Zuschnitt zu gewährleisten. Dabei gleitet der zu vereinzelnde Zuschnitt über die in Bewegungsrichtung der Zuschnitte unbewegbare Gleitzunge hinweg, ohne den Hilfssauger aus seiner vorgesehenen Lage zu bringen.

Vorzugsweise besteht der Hilfssauger aus einem oben offenen und an eine Unterdruckquelle angeschlossenen Balgen, der sich infolge seiner axialen Nachgiebigkeit der jeweiligen Zuschnittkrümmung anpaßt und auf diese Weise gewährleistet, daß seine Ansaugöffnung unabhängig vom jeweiligen Grad der Zuschnittkrümmung stets in Berührung mit dem zu vereinzelnden Zuschnitt kommt.

Es empfiehlt sich, den Hilfssauger oder auch mehrere Hilfssauger und die Gleitzunge auf einem gemeinsamen Träger anzuordnen, der sich parallel zu den Riemenführungen erstrecken kann.

Besonders vorteilhaft ist die Verwendung von Förderriemen mit an eine Unterdruckquelle angeschlossenen Saugöffnungen. In diesem Falle findet das Ansaugen im Bereich der Krümmung eines zu vereinzelnden Zuschnitts zweistufig in der Weise statt, daß der Zuschnitt zunächst von den Hilfssaugern angesaugt und dabei in den Wirkungsbereich der Saugöffnungen der Förderriemen gebracht wird, die den Zuschnitt alsdann vollflächig erfassen.

Die Erfindung wird nachfolgend anhand eines in der Zeichnung dargestellten Ausführungsbeispiels des näheren erläutert. In der Zeichnung zeigen :

Fig. 1 : eine erfindungsgemäße Vereinzelungsvorrichtung in ihrer Ruhestellung,

Fig. 2 : die Vereinzelungsvorrichtung der Fig. 1 in ihrer Arbeitsstellung während der Anfangsphase der Vereinzelung,

Fig. 3 : einen Querschnitt durch die Vereinzelungsvorrichtung nach der Linie III-III in Fig. 1,

Fig. 4 : einen Querschnitt durch die Vereinzelungsvorrichtung nach der Linie IV-IV in Fig. 2

Fig. 5 : einen Teil der Vorrichtung nach den Fig. 1 bis 4 mit zwei Hilfssaugern und

Fig. 6 : eine Draufsicht auf die Förderriemen und Hilfssauger der Fig. 1 bis 4.

Die Vereinzelungsvorrichtung weist mehrere, in der Horizontalen nebeneinander angeordnete Förderriemen 1 auf. Die Förderriemen 1 sind mit Saugöffnungen 2 versehen und über Umlenkrollen 3, 4 geführt. Oberhalb der Förderriemen 1 sind Anschläge 5 angeordnet, zwischen denen und einer Zuschnittstütze 6 sich ein Zuschnittstapel 7 befindet. Die Anschläge 5 liegen einer Stützrolle 8 gegenüber, so daß sich ein Förderspalt 9 zwischen den Förderriemen 1 und den Anschlagenden ergibt. Die Förderriemen 1 sind im Bereich des Zuschnittstapels 7 um etwa 3 cm heb- und senkbar zwischen Riemenführungen 10, 11 angeordnet, auf denen der Zuschnittstapel 7 bzw. dessen unterster Zuschnitt 12 ruht.

Neben jeder Riemenführung 10, 11 befindet sind ein Hilfssauger 13 aus einem Kanalbalgen 14 mit einem Anschlußstutzen 15 für eine Unterdruckquelle und zwei Balgen 16, 17 mit je einer Saugöffnung 18, 19. Die Balgen 16, 17 sind im Bereich ihrer Saugöffnungen 18, 19 mit einer entsprechend gelochten Gleitzunge 20 verbunden, die an einer Konsole 21 des Kanalbalgens 14 befestigt ist und eine glatte Oberfläche mit niedrigem Reibwert besitzt.

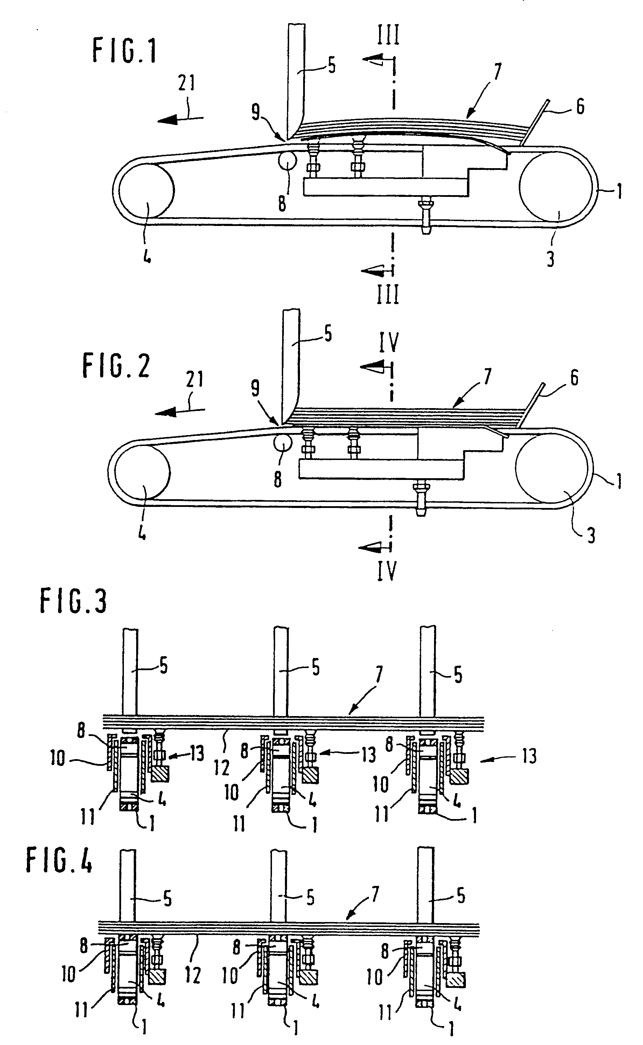

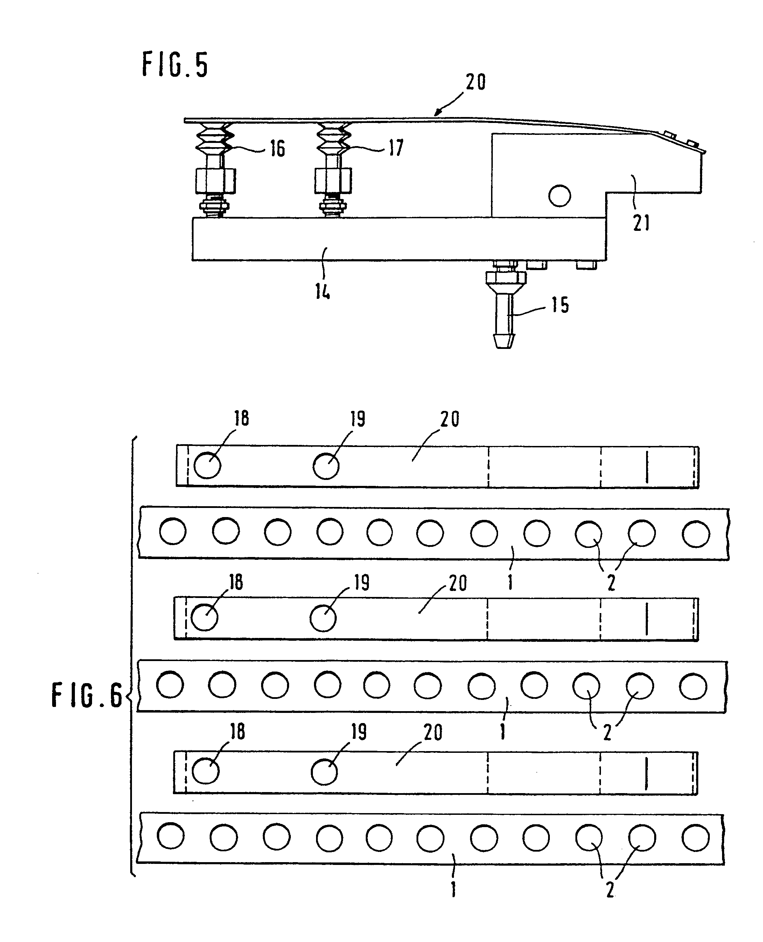

Infolge ihrer axialen Nachgiebigkeit schmiegen sich die Balgen 16, 17 mit ihren Saugöffnungen 18, 19 im Bereich einer Zuschnittkrümmung an den jeweils zu vereinzelnden bzw. untersten Zuschnitt 12 an, auch wenn dieser in diesem Bereich, wie aus den Fig. 1 und 3 ersichtlich, nicht auf den Zuschnittführungen 10, 11 liegt. Demgemäß läßt sich der zu vereinzelnde Zuschnitt 12 in der aus den Fig. 2, 4 ersichtlichen Weise in Richtung auf den Förderriemen 1 saugen und auch im Bereich seiner Krümmung mit den zum Vereinzeln angehobenen Förderriemen 1 in Berührung bringen, wobei sich die Balgen unter dem Einfluß des Unterdrucks selbst verkürzen. Die nunmehr vollflächig an dem Zuschnitt 12 anliegenden Förderriemen 1 übernehmen alsdann den Zuschnitt 12 und fördern ihn durch den Spalt 9 zwischen den Anschlägen 5 und den darunter befindlichen Förderbändern 1 in Richtung des Pfeils 21 ab. Die Balgen 18, 19 verändern dabei ihre Lage nicht, da sie durch die vorzugsweise aus poliertem Stahlblech bestehende Gleitzunge 20 in ihrer vorgesehenen Lage gehalten werden ; sie behindern auch nicht das Abfördern des Zuschnitts 12, da sie einen verhältnismäßig geringen Reibwert besitzen und an ihren Öffnungen 18, 19 jeweils nur ein verhältnismäßig geringer Unterdruck wirksam ist, der auch bei Beginn des Riementransports abgeschaltet werden kann, um ein ungehindertes Gleiten des Zuschnitts 12 über die Gleitzungen 20 zu ermöglichen.

Insgesamt eröffnen die Hilfssauger 13 die Möglichkeit, den jeweils zuunterst liegenden Zuschnitt 12 eines Stapels 7 entsprechend der zeichnerischen Darstellung in Fig. 2 in eine ideale Lage für das Vereinzeln zu bringen, so daß der sich anschließenden Falt- und Klebemaschine die erforderlichen Zuschnitte lagegerecht und mit jeweils gleichbleibendem Abstand zugeführt werden, ohne daß sich Unterbrechungen ergeben, weil die zwischen den Förderriemen 1 und dem jeweils zu vereinzelnden Zuschnitt 12 wirksamen Saug- und Reibungskräfte infolge einer Zuschnittkrümmung für das Vereinzeln und das schlupffreie Abfördern des Zuschnitts nicht ausreichen.

## Ansprüche

1. Vorrichtung zum Vereinzeln gestapelter Zuschnitte mit mindestens einem Zuschnittanschlag (5), mit mindestens einem Förderriemen (1) und mit mindestens einem neben dem Förderriemen (1) angeordneten, den Förderriemen (1) überragenden, den untersten Zuschnitt erfassenden, an eine Unterdruckquelle angeschlossenen und oben offenen Hilfssauger (13), dessen Saugöffnung (18 bzw. 19) senkrecht hin- und herbewegbar ist, **dadurch gekennzeichnet,** daß der Hilfssauger (13) im Bereich seiner Saugöffnung (18 bzw. 19) mit einer in Bewegungsrichtung der Zuschnitte unbewegbaren, gelochten Gleitzunge (20) verbunden ist.

2. Vorrichtung nach Anspruch 1, **dadurch gekennzeichnet,** daß der Hilfssauger (13) aus einem Balgen (16, 17) besteht.

3. Vorrichtung nach Anspruch 1 oder 2, **dadurch gekennzeichnet,** daß die Hilfssauger (16, 17) und die Gleitzunge (20) auf einem gemeinsamen Träger (14, 21) angeordnet sind.

4. Vorrichtung nach Anspruch 3, **dadurch gekennzeichnet,** daß mehrere Hilfssauger (16, 17) in Vorschubrichtung hintereinander und durch eine Gleitzunge (20) miteinander verbunden auf dem gemeinsamen Träger (14, 21) angeordnet sind.

5. Vorrichtung nach einem der Ansprüche 1 bis 4, **dadurch gekennzeichnet,** daß der Förderriemen (1) an eine Unterdruckquelle angeschlossene Saugöffnung (2) aufweist.

6. Vorrichtung nach einem der Ansprüche 1 bis 5, **dadurch gekennzeichnet,** daß der Förderriemen (1) heb- und senkbar ist.

## Claims

1. Apparatus for the singularization of stacked blanks, comprising at least one blank stop (5), at least one conveying belt (1) and at least one auxiliary suction device (13) which is arranged next to the conveying belt (1), projects above the conveying belt (1), takes hold of the bottommost blank, is connected to a vacuum source and is open at the top, the suction opening (18 or 19) of which auxiliary suction device (13) can be moved perpendicularly in a reciprocating manner, characterized in that the auxiliary suction device (13) is connected in the region of its suction opening (18 or 19) to a perforated sliding tongue (20) immovable in the direction of movement of the blanks.

2. Apparatus according to Claim 1, characterized in that the auxiliary suction device (13) consists of bellows (16, 17).

3. Apparatus according to Claim 1 or 2, characterized in that the auxiliary suction devices (16, 17) and the sliding tongue (20) are arranged on a common support (14, 21).

4. Apparatus according to Claim 3, characterized in that a plurality of auxiliary suction devices (16, 17) are arranged on the common support (14, 21) one after the other in the feed direction and in such a way as to be connected to one another by a sliding tongue (20).

5. Apparatus according to one of Claims 1 to 4, characterized in that the conveying belt (1) has (lacuna) suction opening (2) connected to a vacuum source.

6. Apparatus according to one of Claims 1 to 5, characterized in that the conveying belt (1) can be lifted and lowered.

## Revendications

1. Dispositif de prélèvement d'un coupon dans une pile avec au moins une butée à coupon (5), avec au moins une courroie transporteuse (1) et avec au moins un suceur auxiliaire (13) ouvert au sommet, disposé à côté de la courroie transporteuse (1), surmontant la courroie transporteuse (1), saisissant le coupon inférieur et raccordé à une source de dépression, et dont l'ouverture d'aspiration (18, respectivement 19) est déplaçable verticalement de haut en bas et de bas en haut, caractérisé en ce que, dans la région de son ouverture d'aspiration (18, respectivement 19), le suceur auxiliaire (12) est raccordé à une lame de glissement (20) perforée, immobile dans la direction de déplacement des coupons.

2. Dispositif suivant la revendication 1, caractérisé en ce que le suceur auxiliaire (13) se compose d'un soufflet (16, 17).

3. Dispositif suivant la revendication 1 ou 2, caractérisé en ce que les suceurs auxiliaires (13) et la lame de glissement (20) sont montés sur un support commun (14, 21).

4. Dispositif suivant la revendication 3, caractérisé en ce que plusieurs suceurs auxiliaires (13) sont disposés l'un à la suite de l'autre dans la direction d'avancement et sont reliés l'un à l'autre par une lame de glissement (20), sur le support commun (14, 21).

5. Dispositif suivant l'une ou l'autre des revendications 1 à 4, caractérisé en ce que la courroie transporteuse (1) présente une ouverture d'aspiration (2) raccordée à une source de dépression.

6. Dispositif suivant l'une ou l'autre des revendications 1 à 5, caractérisé en ce que la courroie transporteuse (1) est relevable et abaissable.

FIG.1

FIG.2

FIG.3

FIG.4

## FIG.5

## FIG.6